(19) **Europäisches Patentamt**
**European Patent Office**
**Office européen des brevets**

(11) **EP 1 762 935 B1**

(12) **EUROPÄISCHE PATENTSCHRIFT**

(45) Veröffentlichungstag und Bekanntmachung des Hinweises auf die Patenterteilung:
**17.02.2010 Patentblatt 2010/07**

(51) Int Cl.:
***G06F 9/46*** *(2006.01)*

(21) Anmeldenummer: **05019817.5**

(22) Anmeldetag: **12.09.2005**

(54) **Verfahren zur Steuerung eines Zugriffs auf Ressourcen eines Datenverarbeitungssystems und Steuerungsprogramm**

Method for controlling a request for resources in a computer system and control program

Procédé pour contrôler une demande de ressource dans un système informatique et programme de commande

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**14.03.2007 Patentblatt 2007/11**

(73) Patentinhaber: **SIEMENS AKTIENGESELLSCHAFT**
**80333 München (DE)**

(72) Erfinder:
• **Bichler, Martin, Prof.**
  **85748 Garching (DE)**
• **Setzer, Thomas**
  **80687 München (DE)**

(56) Entgegenhaltungen:
**US-A- 5 640 569     US-A1- 2003 028 642**
**US-B1- 6 799 208**

## Beschreibung

Die vorliegende Erfindung betrifft ein Verfahren entsprechend dem Oberbegriff des Anspruchs 1. Ein solches Verfahren ist beispielsweise aus US 5,640,569 bekannt.

Virtualisierungskonzepte basieren auf der Trennung von logischen und physikalischen Ressourcen und führen dadurch zu einer effizienteren Nutzung von Datenverarbeitungssystemen bzw. IT-Infrastruktur. Kurzfristig zusätzlich benötigte Ressourcen werden im Bedarfsfall dynamisch aus Ressourcenpools zugewiesen. Als Ressourcen können sämtliche für eine Erbringung einer elektronischen Dienstleistung wesentliche Faktoren betrachtet werden, beispielsweise CPU-Zyklen, Hauptspeicher, I/O, Netzwerkbandbreite, Lizenzen oder Strom. Ebenso läßt sich auch die gemeinsame Nutzung von Hardware durch verschiedene Anwendungen auf einem Server oder die Ressourcenteilung bei mehrschichtigen Web-Applikationen als eine Form der Virtualisierung bezeichnen.

Der Einsatz von Virtualisierungstechniken erfordert allerdings Konzepte für die Ressourcenallokation und das Management von Dienstleistungsvereinbarungen (service level management - SLM) bei IT-Dienstleistern. Bei hoher Arbeitslast können auch in virtualisierten Infrastrukturen Knappheiten in Ressourcenpools auftreten, wodurch die Beantwortung sämtlicher Dienstanfragen nicht mehr möglich ist. Gerade bei stark schwankender Arbeitslast oder durch den Ausfall von Ressourcen kann das Lastaufkommen die bereitgestellten Kapazitäten übersteigen. In solchen Phasen von Überlast gilt es, Dienste abhängig von ihren Prioritäten zuzulassen oder abzulehnen, so daß der Gesamtschaden bzw. die Kosten temporärer Unterkapazität minimiert werden. Die Priorität eines Dienstes ist hierbei abhängig davon, welche Relevanz dessen Ausführung gemäß Dienstleistungsvereinbarungen (service level agreements - SLA) hat. Im Gegensatz zum Fall dedizierter Zuordnung von Ressourcen zu bestimmten Diensten konkurrieren heterogene Dienste mit unterschiedlichen Prioritäten und Ressourcenanforderungen um knappe Ressourcen. Auch bei unvollständiger Ressourcenauslastung sinkt mit jeder Bedienung einer Anfrage für die Zeitdauer der Diensterbringung die verfügbare Restkapazität einer gemeinsam genutzten Ressource, was mit steigenden Opportunitätskosten einhergeht. Opportunitätskosten sind eine Vergleichsgröße für entgangenen Gewinn, Ertrag oder Nutzen aus der besten der nicht gewählten Alternativen für eine Verwendung von Gütern.

Einige bisher bekannten Ansätze zur Steuerung eines Zugriffs auf Ressourcen in einem Datenverarbeitungssystem haben sich mit Zugriffskontrolle bei Web-Servern beschäftigt. In X. Chen, P. Mohapatra, and H. Chen, "An Admission Control Scheme for Predictable Server Response Time for Web Accesses", World Wide Web Conference, 2001 und M. Rumsewicz, M. Castro, and M. Tai Le, "Eddie Admission Control Scheme: Algorithm Description, Prototype Design Details and Capacity Benchmarking", Sourceforge 1999 wird vorgeschlagen, wie bei Überlast die Anfragen einzelner Nutzer zugelassen oder abgelehnt werden können (session-based admission control), und nicht einzelne HTTP-Anfragen von allen Nutzern. Dadurch kann auch bei Überlast die Leistung für bereits akzeptierte Nutzer aufrechterhalten werden.

Aus Eggert and J. Heidemann, "Application-Level differentiated service from an internet server", World Wide Web Journal, vol. 3, pp. 133-142, 1999 ist ein Zugriffskontrollverfahren für Web-Server mit zwei verschiedenen Nutzerklassen bekannt. Unterschieden wird hier zwischen HTTP-Anfragen, die vom Benutzer abschickt werden und solchen, die der Proxy-Server initiiert (proxy prefetching), wobei lediglich einfache Web-Server mit statischen Inhalten betrachtet werden.

In A. Verma and S. Ghosal, "On Admission Control for Profit Maximization of Networked Service Providers", World Wide Web Conference, Budapest, Hungary, 2003 wird ein allgemeines Zugriffskontrollverfahren für IT-Dienstleister mit einer knappen Ressource beschrieben, das die prognostizierte Dauer einer Dienstanfrage, den Ertrag bei Einhaltung einer definierten Antwortzeit sowie Vertragsstrafen bei Nichteinhaltung betrachtet.

Aus S. Elnikety, E. Nahum, J. Tracey, and W. Zwaenepoel, "A Method for Transparent Admission Control and Request Scheduling in E-Commerce Web Sites", World Wide Web Conference, New York, NY, USA, 2004 ist ein einfaches Zugriffskontrollverfahren für mehrschichtige Web-Anwendungen bekannt, bei denen die Anzahl der Zugriffe beschränkt wird, um die Antwortzeit in bestimmten Schranken zu halten. Der Ansatz beruht auf einer Schätzung der benötigten Dauer einer Dienstanfrage und Messungen der Systemkapazität.

Eine Optimierung von Zugriffsrichtlinien auf Web-Anwendungen mit unterschiedlichen Antwortzeitgarantien, die auf einer Menge von Web-Servern installiert werden, ist in Z. Liu, M. S. Squillante, and J. L. Wolf, "On Maximizing Service-Level-Agreement Profits", 3rd ACM Conference on Electronic Commerce, Orlando, FL, USA, 2001 beschrieben. Verwendet werden ein Warteschlangennetzwerk zur Modellierung der Systemarchitektur sowie Optimierungsmodelle bei gleichzeitiger Berücksichtigung von Vertragsstrafen, für den Fall, daß die Antwortzeit nicht eingehalten wird. Dabei wird davon ausgegangen, daß der durchschnittliche Ressourcenbedarf für alle Anwendungen geringer ist als die zur Verfügung stehenden Ressourcen.

Der vorliegenden Erfindung liegt die Aufgabe zugrunde, ein Verfahren zur effizienten Steuerung des Zugriffs auf Ressourcen eines Datenverarbeitungssystems und eine geeignete Implementierung des Verfahrens anzugeben.

Erfindungsgemäß wird diese Aufgabe durch ein Verfahren mit den in Anspruch 1 angegebenen Merkmalen und durch ein Steuerungsprogramm mit den in Anspruch 12 angegebenen Merkmalen gelöst. Vorteilhafte Ausgestaltungen der vorliegenden Erfindung sind in den abhängigen Ansprüchen angegeben.

Erfindungsgemäß wird zur Steuerung eines Zugriffs auf Ressourcen eines Datenverarbeitungssystems eine Prioritätskennzahl für eine Anforderung eines Zugriffs auf zumindest eine Ressource ermittelt. Außerdem wird eine Vergleichskennzahl für eine Einräumung des Zugriffs auf die zumindest eine angeforderte Ressource bezüglich einer alternativen Verwendung der Ressource ermittelt. Für eine Gesamtheit von Ressourcenanforderungen an das Datenverarbeitungssystem wird ein Extremwert für eine Summe über Produkte aus einer jeweiligen Prioritätskennzahl und aus einer Anzahl von jeweils einräumbaren Ressourcenzugriffen unter Berücksichtigung eines maximalen Leistungsvermögens einer angeforderten Ressource ermittelt. Für eine Ressourcenanforderung wird überprüft, ob die Prioritätskennzahl und die Vergleichskennzahl ein vorgegebenes Verhältnis zueinander aufweisen. In Abhängigkeit vom ermittelten Extremwert und vom Überprüfungsergebnis wird der Zugriff eingeräumt. Eine Ermittlung des maximalen Leistungsvermögens einer angeforderten Ressource erfolgt dabei unter Berücksichtigung einer prognostizierten Nachfrage nach der angeforderten Ressource innerhalb eines vorgebbaren Zeitraums und einer Ressourcenauslastung zu einem vorgebbaren Zeitpunkt. Ressourcen werden durch Dienste und/oder Anwendungen angefordert.

Die vorliegende Erfindung geht von Ertragsmanagementansätzen aus, die Kapazitäten für hoch priorisierte Dienstnehmer reservieren und die restliche Kapazität für weitere Kundensegmente vergeben. Eine Differenzierung kann dabei nach qualitativen Merkmalen des Dienstes erfolgen.

Virtualisierte IT-Infrastrukturen stellen eine Reihe heterogener Ressourcen zur Verfügung. Virtualisierte Ressourcen können zur Befriedigung einer Nachfrage in unterschiedlichsten Segmenten bzw. Dienstklassen verwendet werden. Randbedingungen in IT-Ressourcen-Netzwerken führen zu Annahmen, die im Vergleich zu Ertragsmanagementansätzen bei Fluglinien, bei denen eine Nachfrage nach Ressourcen meist kontinuierlich verläuft, nach neuen Modellierungsansätzen verlangen. In IT-Ressourcen-Netzwerken erfolgen Reservierung und tatsächlicher Konsum einer Dienstleistung in der Regel gleichzeitig oder zeitnah und nicht zu unterschiedlichen Zeitpunkten, wie das in der Hotelbranche oder bei Fluglinien der Fall ist. Neben dem beschriebenen Einsatzbereich der vorliegenden Erfindung bei IT-Dienstleistern mit virtualisierter Infrastruktur läßt sich das erfindungsgemäße Verfahren auf Bereiche übertragen, bei denen stochastisch von heterogenen Diensten auf gemeinsam genutzte Ressourcen zugegriffen wird. Beispiele hierfür sind Call-Center, Energieversorgung oder Medienvermietung, insbesondere Videotheken.

Entsprechend einer Weiterbildung der vorliegenden Erfindung stellt die Vergleichskennzahl Opportunitätskosten einer Verwendung einer Ressource dar. Vorzugsweise steigt die Prioritätskennzahl mit zunehmender Priorität einer Ressourcenanforderung, so daß der Extremwert ein Maximum ist.

Entsprechend einer bevorzugten Ausgestaltung der vorliegenden Erfindung ist die Prioritätskennzahl eine monetäre Größe zur Bewertung einer Relevanz und/oder eines Wertes einer Ressourcenanforderung, und es wird überprüft, ob die Prioritätskennzahl größer als die Vergleichskennzahl ist. Des weiteren können in die Ermittlung des Extremwerts zusätzlich mit einer Ablehnung einer Ressourcenanforderung verbundene Aufwände einbezogen werden. Die Ermittlung des Extremwerts erfolgt vorteilhafterweise durch ein deterministisches lineares Programm.

Für das maximale Leistungsvermögen einer angeforderten Ressource auf Grundlage von prognostizierten Restdauern von Zugriff auf die Ressource anfordernden Ressourcenanforderungen kann ferner ein Korrekturwert berechnet und dieser in die Ermittlung des Extremwerts einbezogen werden. Auch für die Ressourcenanforderungen können Korrekturwerte, welche relevante Anteile einer Belegungsdauer einer angeforderten Ressource durch eine Ressourcenanforderung innerhalb eines vorgebbaren Zeitraum angeben, berechnet und in die Ermittlung des Extremwerts einbezogen werden. Darüber hinaus kann für jeden Zeitpunkt einer Ressourcenanforderung eine Echtzeitermittlung der Vergleichskennzahl erfolgen.

Des weiteren können die Ressourcen des Datenverarbeitungssystems in ihrer Gesamtheit eine Heterogenität aufweisen und beliebige Ressourcentypen bei der Zugriffssteuerung berücksichtigt werden. Vorzugsweise wird bei der Zugriffssteuerung über mehrere Dienste in einem Diensteportfolio, wobei eine Mehrzahl von heterogenen Ressourcen gleichzeitig durch einen Dienst nutzbar ist.

Das erfindungsgemäße Verfahren kann mittels eines Steuerungsprogramms implementiert werden, das in einen Arbeitsspeicher einer Datenverarbeitungsanlage ladbar ist und zumindest einen Codeabschnitt aufweist, bei dessen Ausführung eine Ermittlung einer Prioritätskennzahl für eine Anforderung eines Zugriffs auf zumindest eine Ressource veranlaßt wird. Außerdem wird eine Ermittlung einer Vergleichskennzahl für eine Einräumung des Zugriffs auf die zumindest eine angeforderte Ressource bezüglich einer alternativen Verwendung der Ressource veranlaßt. Für eine Gesamtheit von Ressourcenanforderungen an das Datenverarbeitungssystem wird eine Ermittlung eines Extremwerts für eine Summe über Produkte aus einer jeweiligen Prioritätskennzahl und aus einer Anzahl von jeweils einräumbaren Ressourcenzugriffen unter Berücksichtigung eines maximalen Leistungsvermögens einer angeforderten Ressource veranlaßt. Für eine Ressourcenanforderung wird darüber hinaus eine Überprüfung veranlaßt, ob die Prioritätskennzahl und die Vergleichskennzahl ein vorgegebenes Verhältnis zueinander aufweisen. In Abhängigkeit vom ermittelten Extremwert und vom Überprüfungsergebnis wird der Zugriff eingeräumt, wenn das Steuerungsprogramm in der Datenverarbeitungsanlage abläuft. Eine Ermittlung des maximalen Leistungsvermögens einer angeforderten Ressource erfolgt dabei unter Berücksichtigung einer prognostizierten Nachfrage nach der angeforderten Ressource innerhalb eines vorgebbaren Zeitraums und einer Ressourcenauslastung zu einem vorgebbaren Zeitpunkt.

Die vorliegende Erfindung wird nachfolgend an einem Ausführungsbeispiel anhand der Zeichnung näher erläutert. Es zeigt

Figur 1    eine schematische Darstellung einer Ressourcenmatrix,

Figur 2    eine schematische Darstellung einer Ressourcenmatrix unter Berücksichtigung unterschiedlicher Ressourcenbelegungsdauern,

Figur 3    eine schematische Darstellung einer Approximation verfügbarer Ressourcenkapazität,

Figur 4    eine schematische Darstellung einer Approximation zukünftiger Ressourcenbelegung,

Figur 5    eine schematische Darstellung prognostizierter Dienstanfragen,

Figur 6    eine schematische Darstellung gleichverteilter Nachfragezeitpunkte,

Figur 7    eine schematische Darstellung einer Berechnung eines ersten Korrekturfaktors,

Figur 8    eine schematische Darstellung einer Berechnung eines zweiten Korrekturfaktors,

Figur 9    ein Ablaufdiagramm für eine Simulationsdurchführung,

Figur 10   einen Graphen mit Simulationsresultaten.

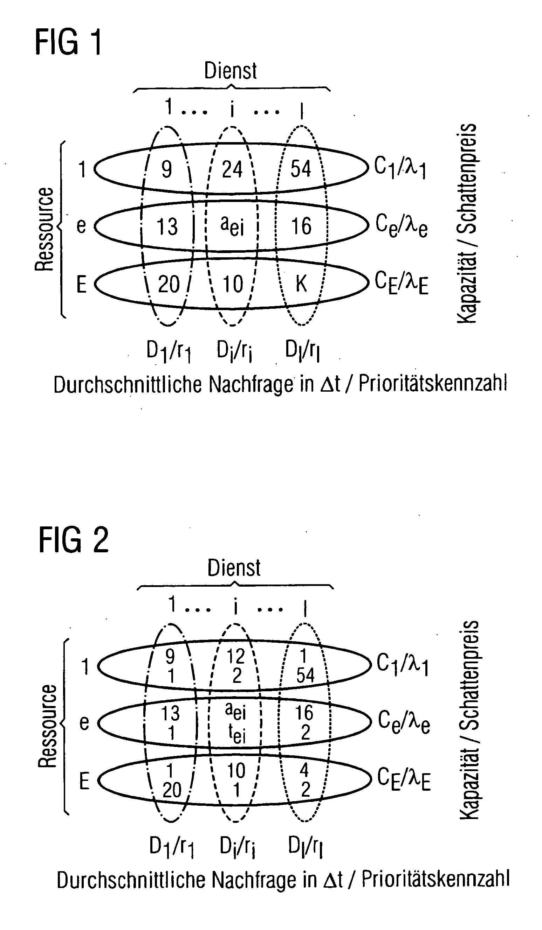

Im vorliegenden Beispiel wird angenommen, daß auf Ressourcen eines IT-Dienstleisters von I unterschiedlichen Diensten i (i = 1, ..., I) zugegriffen wird, wobei die Zugriffe zu diskreten Zeitpunkten $t_k$ (k = 0, ..., ∞) im Durchschnitt $D_i$-mal erfolgen. $D_i$ wird als konstant und unabhängig von vergangenen Dienstnachfragezeitpunkten und -mengen angenommen. Die Belegungsdauer der im Zuge einer Diensterbringung verwendeten Ressourcen und die der Diensterbringung selbst werden als von konstanter Länge $\Delta t$ ($\Delta t = t_{k+1} - t_k$) und somit zum jeweils nächstmöglichen Nachfragezeitpunkt $t_{k+1}$ als abgeschlossen angenommen. Ressourcenbelegungskoeffizienten $a_{ei}$ geben die Anforderungen bzw. Verwendungsmenge an Einheiten der Ressource e (e = 1, ..., E) für die Zeitdauer $\Delta t$ an. Eine Ressource e hat eine begrenzte Kapazität $C_e$. Die Ermittlung von Ressourcenbelegungskoeffizienten $a_{ei}$ einzelner Dienste, wie CPU-Zyklen, Hauptspeicher in Bytes oder I/O in Blocks, kann über Messungen in isolierten Test-Umgebung, wie diese bei Lasttests und Softwareabnahmen zum Einsatz kommen, mit hinreichend hoher Genauigkeit erfolgen. Ein Basismodell wird zunächst mit dem Mittelwert der Ressourcenanforderungen deterministisch parametrisiert. Figur 1 veranschaulicht die genannten Zusammenhänge.

Die zur Verfügung stehenden Ressourcen sollen nun unter Berücksichtigung von Dienstprioritäten optimal für die Beantwortung von Dienstanfragen eingesetzt werden. Unter den gegebenen Annahmen kann das Problem durch ein Ganzzahliges Lineares Programm (integer program - IP) formuliert werden.

$$\max \quad \sum_{i \leq I} r_i \cdot x_i$$

$$s.t. \quad \sum_{i \leq I} a_{ei} x_i \leq C_e \quad \forall e \leq E$$

$$x_i \leq D_i \qquad \forall i \leq I$$

$$x_i \in Z_+ \qquad \forall i \leq I$$

Die ganzzahlige Variable $x_i$ beschreibt die Anzahl der zu akzeptierenden Dienstanfragen für eine Zeitperiode $\Delta t$. Die Kennzahl $r_i$ quantifiziert die Priorität eines Dienstes und nimmt Werte aus dem Bereich positiver reeller Zahlen an, wobei $r_i$ mit zunehmender Priorität steigt. Die Prioritätskennzahl $r_i$ kann hierbei äquivalent einer monetären Größe interpretiert werden, die die Relevanz bzw. den Wert im Sinne von Schadens- oder Kostenvermeidung durch eine Diensterbringung repräsentiert.

Die Zufallsvariable $D_i$ wird in dieser Formulierung als deterministische Größe behandelt. Sind in einem linearen Programm (LP) sämtliche Restriktionen der Entscheidungsvariablen sowie die rechte Seite des Gleichungssystems ganzzahlig, was in unserem Fall gegeben ist, so sind dessen Lösungen ganzzahlig und das IP kann durch seine LP-Relaxation, einem Deterministischen Linearen Programm (DLP), gelöst werden. Details hierzu sind E. L. Williamson, "Airline Network Seat Control", Cambridge, MA, USA: MIT, 1992 zu entnehmen.

Die dualen Variablen $\lambda_e$ der Kapazitätsrestriktionen der LP-Relaxation können ökonomisch als Schattenpreise oder Opportunitätskosten der Verwendung einer Ressourceneinheit interpretiert werden. Opportunitätskosten einer Anfrage nach Dienst i können durch Addition der Produkte aus Ressourcenbelegungskoeffizient und Opportunitätskosten pro Ressourceneinheit ($\Sigma_e\, a_{ei}\, \lambda_e$) berechnet werden. Entsprechend dem vorliegenden Beispiel werden ausschließlich Dienstanfragen akzeptiert, deren Prioritätskennzahl den Wert der Opportunitätskosten übersteigt, die eine Dienstannahme verursachen würde.

Automatisierte Messung und Überwachung von IT-Dienstleistungen werden durch IT-Service-Management-Werkzeuge heute immer stärker Realität. Dazu gehört, daß Verletzungen von SLAs unmittelbar erfaßt werden und im Rahmen von Vertragsstrafen Berücksichtigung finden. Unter diesen Annahmen könnte jede Ablehnung einer Dienstanfrage auch mit expliziten Kosten bzw. Vertragsstrafen verbunden sein, die in dem Entscheidungsmodell berücksichtigt werden. Entsprechende Vertragsstrafen können beispielsweise über Zielprogrammierung in obigem Basismodell berücksichtigt werden.

$$\max \quad \sum_{i \leq I}(r_i \cdot x_i - p_i d_{i-})$$

$$s.t. \quad \sum_{i \leq I}a_{ei}x_i \leq C_e \qquad \forall e \leq E$$

$$x_i + d_{i-} = D_i \qquad \forall i \leq I$$

$$x_i, d_{i-} \geq 0 \qquad \forall i \leq I$$

In dieser Formulierung stellt $p_i$ die Vertragsstrafe für die Ablehnung einer Anfrage nach einem bestimmten Dienst dar. Die Schlupfvariablen $d_{i-}$ quantifiziert die negative Abweichungen von der aktuell prognostizierten Nachfrage $D_i$, die durch zu knappe Ressourcen entstehen.

MODELL MIT KONTINUIERLICHER DIENSTNACHFRAGE

Die vorstehend beschriebene Basismodellvariante unterstellt Dienstanfragen zu diskreten Zeitpunkten, deren Bearbeitungen zum nächsten diskreten Nachfragezeitpunkt abgeschlossen sind. IT-Dienstleister sehen sich oft mit kontinuierlicher Dienstnachfrage konfrontiert, und verschiedene Dienste haben unterschiedliche Bearbeitungsdauern. Dienste belegen Ressourcen also nicht nur in bestimmten Quantitäten, sondern auch für bestimmte Zeitdauern. Die Ressourcenbelegungsmatrix ist um eine zeitliche Dimension $t_{ei}$ zu erweitern, die angibt, wie viele Zeiteinheiten ein Dienst i $a_{ei}$ Einheiten einer Ressource e belegt (siehe Figur 2).

Dadurch entfallen vorgegebene, diskrete Planungsintervalle. Ressourcen können in einem Moment nahezu ausgelastet sein und nach der Beendung aktiver Dienstanfragen im nächsten Moment wieder fast in maximaler Kapazität zur Verfügung stehen. Ziel der Zugriffskontrollmodelle ist es, abhängig von verfügbaren Ressourcenmengen Anfragen auf Dienste niedriger Priorität vorausschauend abzuweisen um Ressourcen für Anfragen nach Diensten höherer Priorität zu reservieren. Zum einen sind somit die im Planungsintervall verfügbaren Ressourceneinheiten zu bestimmen, zum anderen sind möglichst kurze Planungsintervalle festzulegen. Der Anforderung kurzer Planungsintervalle und damit einer möglichst exakten Bestimmung aktueller Ressourcenauslastungen kann dadurch Rechnung getragen werden, daß die Neuberechnung der Schattenpreise zu jedem Dienstnachfragezeitpunkt vorgenommen wird und Planungshorizonte jeweils auf die prognostizierten Endzeitpunkte der Ressourcennutzung durch die angefragten Dienste gelegt werden. Bei starken Nachfrageschwankungen führte diese Echtzeit-Berechnung der Opportunitätskosten bei jeder Dienstanfrage in Monte-Carlo-Simulationen zu besseren Ergebnissen als die Berechnung zu fest vorgegebenen Zeitpunkten. Die Dauer für die Berechnung der Opportunitätskosten einer Dienstanfrage liegen bei Szenarien mit 100 Diensttypen und 10 gemeinsam genutzten Ressourcen auf einem Pentium-III-2GHZ-Prozessor meist deutlich unter 10 ms und muß daher in den meisten Realweltszenarien nicht berücksichtigt werden.

Bei sequentiellem anstatt parallelem Ressourcenzugriff, beispielsweise bei einer typischen 3-Schichten Web-Applikationsarchitektur umfassen Web-, Applikations- und Datenbankserver, kann zusätzlich angegeben werden, in welcher Reihenfolge die Ressourcen genutzt werden.

Um das Entscheidungsmodell für die Neuberechnung der Opportunitätskosten zu parametrisieren, sind die aktuelle Auslastung der vom Dienst verwendeten Ressourcen sowie für im Planungsintervall noch erwartete Dienstanfragen zu bestimmen. Entsprechend der Basismodellvariante werden als Kapazitätsrestriktionen die gesamten Ressourcenkapazitäten $C_e$ genommen, falls zu den diskreten Berechnungszeitpunkten für das nächste Planungsintervall keine Dienste aktiv und somit sämtliche Kapazitäten verfügbar sind. Bei kontinuierlicher Dienstnachfrage können Ressourcen jedoch im Moment einer Schattenpreisberechnung durch aktive Dienste teilweise belegt sein und stehen für im Planungsintervall angefragte Dienste erst dann wieder zur Verfügung, wenn die aktiven Dienste diese wieder freigeben. Das Optimierungsprogramm wird dadurch mit zu großzügigen Kapazitätsrestriktionen parametrisiert, wodurch zu geringe Opportunitätskosten berechnet werden und damit nicht ausreichend Kapazität reserviert wird. Die Ermittlung der Ressourcenauslastungen zum Dienstanfragezeitpunkt, beispielsweise über System-Monitoring-Werkzeuge, liefert die aktuell verfügbaren Kapazitäten. Die Parametrisierung des Optimierungsprogramms mit diesen Kapazitätsrestriktionen liefert jedoch zu hohe Schattenpreise, da dies unterstellt, daß die derzeit verwendeten Ressourcen für den gesamten Planungszeitraum belegt bleiben. Werden Dienstanfragen jedoch während des Planungsintervalls beendet, stehen die dann wieder freien Ressourceneinheiten für nach diesem Zeitpunkt angefragte Dienste zur Verfügung.

BERÜCKSICHTIGUNG AKTIVER DIENSTE IM PLANUNGSINTERVALL

Entsprechend Ergebnissen von Monte-Carlo-Simulationen arbeitet das lineare Programm gerade bei sehr heterogenen Diensten in Bezug auf Ressourcenanforderungen sehr restriktiv. Nachfolgende Heuristik verbessert die Ergebnisse des Verfahrens. Die Heuristik umfaßt Berechnungsschritte, um die tatsächlich im Planungsintervall zur Verfügung stehenden Kapazitäten und den Ressourcenbedarf im Planungsintervall anzunähern und führt in den später noch näher beschriebenen Simulationen zu einer Verbesserung der Ergebnisse.

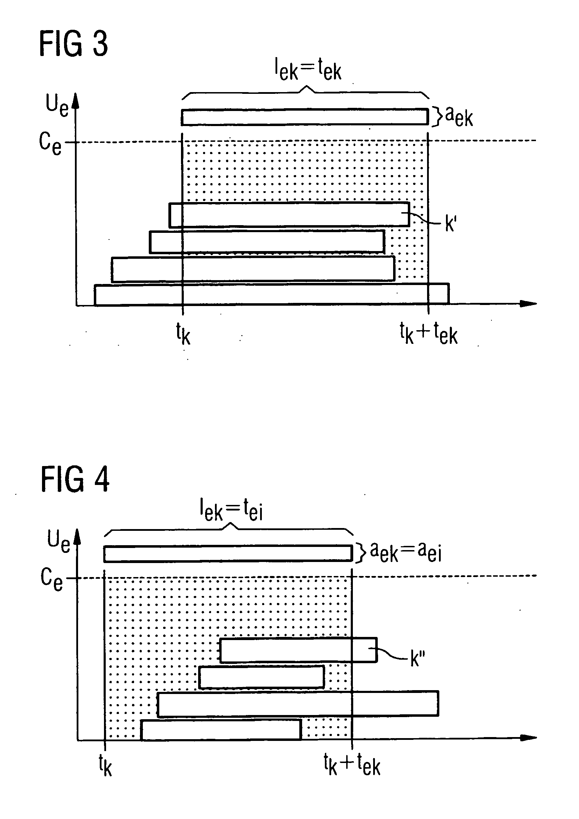

Während des gesamten analysierten Zeitraums, also der Sequenz aller betrachteten Planungsintervalle, treffen insgesamt K Dienstanfragen ein, wobei jede einzelne Dienstanfrage k mit k=1, ..., K einem bestimmten Dienst bzw. einer Dienstklasse i zugeordnet ist. Zum Zeitpunkt $t_k$ einer eintreffenden Anfrage k nach Dienst i werden für alle von Dienst i benötigten Ressourcen e deren Planungszeiträume auf die voraussichtliche Dauer der Ressourcenbelegung durch Anfrage k mit Dienstklasse i gesetzt ($t_{ek} = t_{ei}$). Ressourcen-Planungshorizonte liegen somit jeweils bei $l_{ek} = t_k + t_{ek}$ (siehe Figur 3). Danach werden die nachstehenden Schritte für alle Ressourcen e mit $a_{ek} = a_{ei} > 0$ durchgeführt.

Die prognostizierten Restlaufzeiten $l_{ek'}$ der Verwendungen von e ab $t_k$ durch derzeit aktive Dienstanfragen k' werden bestimmt. Die Ressourcenbelegungsdauern aktiver Dienste werden so um den bereits absolvierten und daher nicht entscheidungsrelevanten Zeitanteil vor $t_k$ gekürzt.

Für alle k', deren prognostizierte Endzeitpunkte der Verwendung der Ressource e nach dem Zeitpunkt $t_k + t_{ek}$ liegen ($l_{ek}$ überschreiten), wird deren in das Modell eingehende Restlaufdauer $l_{ek'}$ auf das entscheidungsrelevante Intervall $l_{ek}$ begrenzt.

Die Summe $\sum_{k'} a_{ek'} l_{ek'}$ aller aktiven Dienste k' entspricht den im Betrachtungszeitraum $l_{ek}$ nicht mehr für die aktuelle Dienstanfrage und neue Dienstanfragen zur Verfügung stehenden Kapazitätseinheiten von e. Subtraktion dieses Wertes von der in $l_{ek}$ theoretisch maximal verfügbaren Kapazität $l_{ek} C_e$ ($C_e$ entspricht der Kapazität von e pro Zeiteinheit) ergibt die im gesamten Intervall noch verfügbaren Kapazitätseinheiten $C_{ek}$. Dieser Wert kann nun als Annäherung für die im Planungszeitraum verfügbare Kapazität verwendet werden.

Die zuvor berechneten $C_{ek}$ geben die verfügbaren Kapazitätseinheiten in den Ressourcenplanungsintervallen $l_{ek}$ an, die für verschiedene Ressourcen e unterschiedlich sein können. Zu bestimmen sind die zu akzeptierenden Anfragen $x_i$ in Abhängigkeit von der zur Länge des Planungsintervalls proportionalen, erwarteten Nachfrage nach Diensten. Wählt man als Planungsintervall das längste Intervall $\max(l_{ek})$, sind die für die kürzeren Intervalle verfügbaren Kapazitäten $C_{ek}$ auf das Intervall $\max(l_{ek})$ hochzurechnen.

$$\widetilde{C}_{ek} = \frac{\max(l_{ek})}{l_{ek}} C_{ek}$$

PLANUNGSIRRELEVANTER ZEITANTEILE ZUKÜNFTIGER DIENSTANFRAGEN

Analog zu der beschriebenen Beschränkung der $t_{ek'}$ sind auch die Anforderungen der im Intervall $l_{ek}$ noch zu erwartenden Dienstanfragen k" nicht in voller Länge zu berücksichtigen, sondern auf das Ende der Planungsperiode $t_k + t_{ek}$ zu beschränken (siehe Figur 4), da Ressourcenbelegungen nach diesem Zeitpunkt für die Annahme-/Ablehnungsentscheidung der Anfrage k nicht mehr unmittelbar relevant sind.

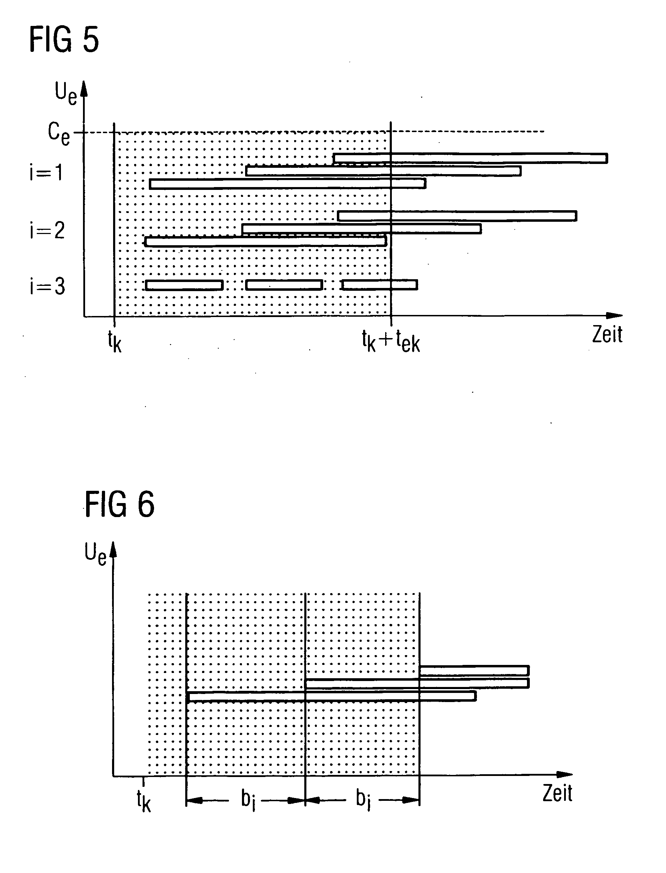

Es sind somit für alle Dienste Korrekturfaktoren $q_{ei}$ festzulegen, die die relevanten Anteile der Belegungsdauern einer Ressource e durch einen Dienst im Planungsintervall angeben. Werden in einem Intervall mehrere Anfragen nach einem Dienst i erwartet, wird eine gleichmäßige Verteilung der Dienstanfragen über das Intervall angenommen. Figur 5 zeigt unterschiedliche Dienste i bei einer prognostizierten Nachfrage von 3 Dienstanfragen im Planungsintervall.

Während bei Dienst 1 alle drei erwarteten Dienstanfragen eine zeitliche Belegungskomponente der Ressource aufweisen, welche außerhalb des Planungszeitraums liegt, werden bei den Diensten 2 und 3 jeweils Belegungen von Ressourcen durch Dienstanfragen erwartet, die vollständig im Planungsintervall liegen, also auch solche, die teilweise außerhalb liegen. Wie in Figur 5 erkennbar, sind die Korrekturfaktoren der drei Dienste unterschiedlich. Bei Annahme einer Gleichverteilung der Nachfragezeitpunkte nach einem Dienst i über ein Planungsintervall können die Korrekturfaktoren $q_{ei}$ über nachstehend beschriebene Heuristik berechnet und damit die für die Planung relevanten Belegungsdauern zukünftiger Dienstanfragen approximiert werden.

Bezeichnet $l_{ek}$ den Planungszeitraum einer Ressource e und $D_i$ die erwartete Nachfragemenge nach Dienst i pro Zeiteinheit, so ergibt sich in $l_{ek}$ die durchschnittliche Dauer zwischen benachbarten Anfragen nach einem Dienst i (siehe auch Figur 6) :

$$b_i = \frac{l_{ek}}{D_i}$$

Um der stochastischen Natur der Nachfrage gerecht zu werden wird davon ausgegangen, daß Nachfragezeitpunkte beliebig in $b_i$ verteilt sein können. Übersteigt die Ressourcenbelegungsdauer $t_{ei}$ den ermittelten Wert $b_i$, so liegt der Anteil $t_{ei} - b_i$ der letzten Anfrage unabhängig vom exakten Nachfragezeitpunkt in $b_i$ außerhalb des Planungsintervalls.

$$\sum_{j=0,...,D_i-1} \max\left(0, t_{ei} - (j+1) \bullet b_i\right)$$

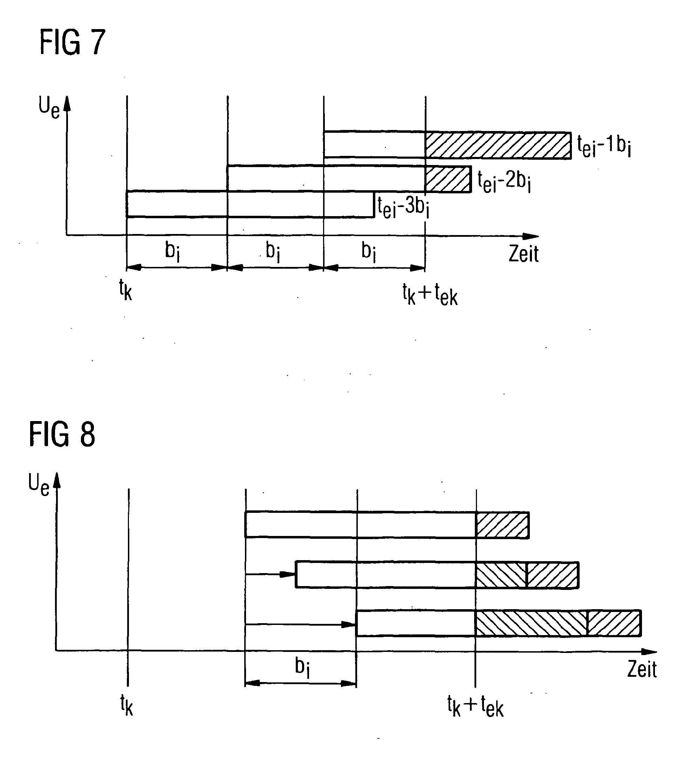

Aufgrund der Annahme eines zufälligen Eintreffens einer Anfrage während eines Intervalls $b_i$ sind zusätzlich die hierdurch verursachten durchschnittlich zu korrigierenden Anteile zu ermitteln. Mögliche Anfragezeitpunkte der erwarteten Dienstanfrage innerhalb eines Intervalls $b_i$ zeigt Figur 8. Der diagonal gestreifte Anteil von $t_{ei}$ zeigt, wie bereits beschrieben, den Anteil der stets außerhalb des Planungsintervalls liegt. Der längs gestreifte Anteil zeigt den Anteil, der abhängig von dem exakten Anfragezeitpunkt Werte zwischen 0 und $b_i$ annehmen kann. Unter den Annahmen einer Gleichverteilung der Wahrscheinlichkeit des Eintreffens der dritten Dienstanfrage entspricht dieser Anteil im Durchschnitt $0,5b_i$.

Auch hier verringert sich durchschnittlich dieser Anteil bei den vorhergehenden Dienstanfragen um jeweils eine Nachfrageintervallänge $b_i$. Der Anteile der Ressourcenbelegungsdauern von Anfragen nach einem Diensttyp i im Planungsintervall $l_{ek}$, der außerhalb des Planungsintervalls fällt, ist somit um folgende Summe zu erweitern:

$$\sum_{j=0,...,D_i-1} \min\left(\frac{b_i}{2}, \frac{t_{ei} - j \bullet b_i}{2}\right)$$

Als Summe der für die Planung nicht relevanten Ressourcenbelegungen durch einen Dienst i ergibt sich:

$$Ext_{ei} = \sum_{j=0,\dots,D_i-1} \begin{cases} \max\ (0, t_{ei} - (j+1)\bullet a_{ei})\ +\ 0,\ bei\ \dfrac{t_{ei}\ \text{-}\ j \bullet a_{ei}}{b_i} <= 0 \\[3mm] \max\ (0, t_{ei} - (j+1)\bullet a_{ei})\ +\ \dfrac{t_{ei}\ \text{-}\ j \bullet a_{ei}}{b_i} \bullet \min\ (\dfrac{a_{ei}}{2}, \dfrac{t_{ei}\ \text{-}\ j \bullet a_{ei}}{2}), bei\ 0 < \dfrac{t_{ei}\ \text{-}\ j \bullet a_{ei}}{b_i} < 1 \\[3mm] \max\ (0, t_{ei} - (j+1)\bullet a_{ei})\ +\ \min\ (\dfrac{b_i}{2}, \dfrac{t_{ei}\ \text{-}\ j \bullet a_{ei}}{2}), bei\ \dfrac{t_{ei}\ \text{-}\ j \bullet a_{ei}}{a_{ei}} >= 1 \end{cases}$$

Hieraus resultiert der Korrekturfaktor

$$q_{ei} = \frac{Ext_{ei}}{D_i \bullet t_{ei}}\ .$$

Das kontinuierliche, deterministische Programm kann damit als Entscheidungsmodell bei jeder neuen Dienstanfrage eingesetzt werden und berücksichtigt sowohl die Heuristik zur Bestimmung verfügbarer Kapazitäten als auch die Heuristik zur Bestimmung der tatsächlichen Ressourcenanforderungen im Planungsintervall.

$$\max \quad \sum_{i \leq I} r_i \cdot x_i$$

$$s.t. \quad \sum_{i \leq I} a_{ei} q_{ei} t_{ei} x_i \leq \frac{\max(l_{ek})}{l_{ek}} C_{ek}\ \ \forall e \leq E$$

$$x_i \leq \max(l_{ek}) D_i \qquad\qquad \forall i \leq I$$

$$x_i \in Z_+ \qquad\qquad\qquad \forall i \leq I$$

Das kontinuierliche, deterministische Programm und verbundene Heuristiken stellen eine modellhafte Abstraktion real auftretender Phänomene in IT-Systemen dar. Das kontinuierliche, deterministische Programm betrachtet Ressourcenbelegungskoeffizienten sowohl hinsichtlich Zeitdauer als auch Quantität pro Zeiteinheit als deterministische, statische Größen. Im Labor durchgeführten Messungen der Ressourcenanforderungen (CPU-Zeit, Hauptspeicherbelegung und I/O) von Web-Anwendungen weisen eine geringe Varianz auf, auch bei starken Veränderungen der Arbeitslast. In der Realität sind Ressourcenanforderungen hinsichtlich Quantität und Zeitdauer stochastisch, beispielsweise Dauer einer Datenbankabfrage bei steigender Größe der Datenbank oder unterschiedlichen Parametrisierungen der Anfragen. Des weiteren wird eine beliebige Verwendbarkeit freier Ressourceneinheiten innerhalb des Planungszeitraums angenommen. Die nachfolgend beschriebenen Experimente zeigen aber, daß die Modellannahmen genügend genau waren, um im Vergleich zu einfachen Zugriffskontrollverfahren Verbesserungen zu bewirken.

SIMULATIONSAUFBAU UND ERGEBNISSE

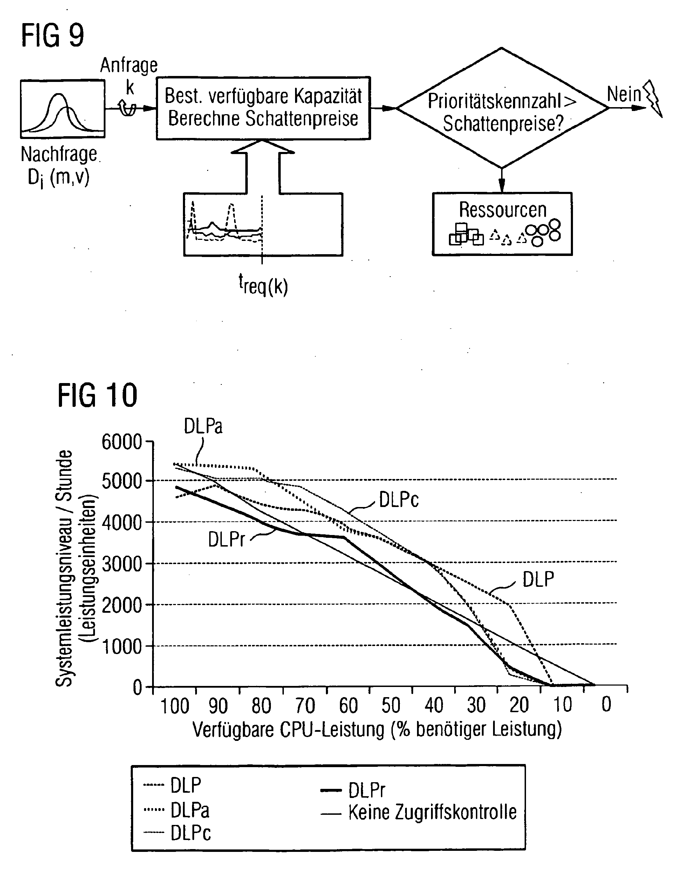

Die vorangehend beschriebenen Modelle berechnen Opportunitätskosten für Dienste und kommen im Rahmen von Zugriffskontroll- und Load-Balancing-Verfahren zum Einsatz. Um Aussagen über die Effizienz der Modelle zu treffen, werden die Formulierungen in Monte-Carlo-Simulationen evaluiert. Effizienz-Kriterium ist die Summe angenommener Dienstanfragen multipliziert mit korrespondierenden Prioritätskennzahlen der Dienste bei verschiedenen Kapazitäten und unterschiedlich volatiler Nachfrage in einem Zeitraum. Diese Summe wird nachfolgend als Systemleistungsniveau bezeichnet. Hierfür werden entsprechend stochastischen Nachfrageverteilungen Dienstanfragen auf hinsichtlich Prioritäten und Ressourcenanforderungen heterogen zusammengesetzte Dienstleistungsportfolios generiert. Zu Beginn jedes Planungsintervalls werden die während des Intervalls verfügbaren Ressourcen-Kapazitäten ermittelt und daraus die Schattenpreise pro Ressourceneinheit und Zeiteinheit berechnet. Übersteigt die Summe der Schattenpreise aller von einer Anfrage k nach Dienst i verwendeten Ressourcen $\Sigma e\ a_{ek}\ t_{ek}\ \lambda_{ei}$ die Prioritätskennzahl des Dienstes, oder sind nicht mehr genügend Ressourcen für die Diensterbringung verfügbar, wird eine Dienstanfrage abgewiesen. Ansonsten wurde ein Dienst ausgeführt. Figur 10 stellt den Ablauf der Simulation schematisch dar.

Im Folgenden wird ein Szenario beschrieben, welches einen Standard IBM xSeries Application Server simuliert, auf welchem, neben anderen, fünf verschiedene Dienstklassen i = 1, ... 5 ausgeführt und angeboten werden. Die Dienstklassen unterscheiden sich, bei identischer Funktionalität, Dienstleistungsvereinbarungen und Ressourcenbelegungskoeffizienten bezüglich ihrer Priorität (ihrem Wert). Auf die Dienste wird normal verteilt mit Erwartungswerten $D_i$ und Standardabweichungen $S_i$ =0,25 $D_i$ pro Sekunde zugegriffen. Entsprechend S. Elnikety, J. Tracey, E. Nahum, and W. Zwaenepoel, "A Method for Transparent Admission Control and Request Scheduling in E-Commerce Web Sites", Management Science, vol. XX, 2003 sind, die Varianzen der Ressourcenbelegungen auf einem Application Server in Phasen unvollständiger Auslastung des Servers gering. Vollständige Auslastungen eines Servers, und damit eine deutliche Reduktion der Abarbeitungszeiten auch bereits aktiver Dienste, wird über die beschriebenen Zugangskontrollverfahren weitestgehend vermieden. $r_i$ bezeichnet die Prioritätskennzahl eines Dienstes i. Die Dienste greifen gemeinsam auf die Ressourcen CPU und RAM des Servers sowie auf das I/O zum Speichernetzwerk zu. Die Simulationsparameter sind nachfolgend tabellarisch dargestellt.

| i | id | $r_i$ (Leistungs-Einheiten) | $D_i$/min. | RAM (MByte) | CPU (Zyklen) | I/O (MByte) |
|---|------|------|----|----|----|-----|
| 1 | S12  | 0,011 | 10 | 24 | 62 | 6,5 |
| 2 | S123 | 0,08  | 10 | 24 | 62 | 6,5 |
| 3 | P2   | 0,015 | 10 | 24 | 62 | 6,5 |
| 4 | S2   | 0,02  | 10 | 24 | 62 | 6,5 |
| 5 | S23  | 0,025 | 10 | 24 | 62 | 6,5 |

Die Kapazitäten bzw. die maximalen Leistungen der betrachteten Ressourcen sind

- CPU: 3,2 GHz, Intel Xeon Prozessor,
- RAM: 4 Gigabyte, DDR II SDRAM,
- I/O: 1 Gigabit/s, Gigabit Ethernet.

Ressourcenbelegungskoeffizienten der Dienste beschreiben

- die Anzahl der benötigten CPU-Zyklen zur Dienstausführung innerhalb einer Sekunde (CPU),
- die Menge des während der Dienstausführung belegten Hauptspeichers in Megabyte (RAM),
- die Menge der vom Speichernetzwerk zum Server während einer Dienstausführung zu übertragenden Daten (I/O) .

In genanntem Szenario werden zwecks besserer Analyse der Simulationsergebnisse, die Ressourcendimensionierungen so gewählt, daß Engpässe ausschließlich bei der Ressource CPU auftreten, da die Kapazitäten der Ressourcen RAM und I/0 hoch im Vergleich zu der erwarteten Last dimensioniert sind. Auf die Ausführung des Betriebssystems, das Monitoring der Ressourcenauslastungen etc. entfallen 0,1 GHz an CPU Leistung, so daß für die Dienste 3,1 GHz CPU-Leistung zur Verfügung stehen. Startend mit verfügbarer CPU-Leistung von 3,1 GHz wird pro Simulationsrunde sukzessiv die Menge der pro Sekunde verfügbaren CPU-Zyklen in 0,062 GHz Schritten dekrementiert. Realisiert wird dies durch die sekündliche Ausführung zusätzlicher Dienste, welche exakt diese Menge an CPU-Zyklen belegen. Eine Simulationsrunde besteht aus jeweils 10 Simulationen mit identischer verfügbarer CPU-Leistung, aus denen Durchschnittswerte gebildet werden. Es wird jeweils das Systemleistungsniveau unter Zugriffskontrolle mit demjenigen ohne Zugriffskontrolle verglichen. Dienste werden nur abgelehnt, wenn diese aufgrund zu hoher Auslastung der CPU nicht innerhalb einer Sekunde nach dem Anfragezeitpunkt erbracht werden können.

Bei allen evaluierten Modellen wird das Optimierungsproblem als deterministisches, lineares Programm formuliert. Planungsintervalldauern, für die optimiert wird und nach denen die Schattenpreise der Ressourcen jeweils neu berechnet werden liegen bei 10 Sekunden. Das kontinuierliche, deterministische Programm (DLPc) nimmt die Optimierung bei jeder Anfrage neu vor und setzt die Planungsdauer auf eine Sekunde, da gemäß Dienstleistungsvereinbarungen die Diensterbringung innerhalb einer Sekunde nach Anfrage möglich ist. Dies wird im Modell über eine Parametrisierung des Entscheidungsmodells mit einer Ressourcenbelegung von 1 GHz für eine Sekunde approximiert. Die Basismodellvariante (DLP) parametrisiert das Modell immer mit den gesamten 3,1 GHz als Kapazitätsrestriktion, während die Variante DLPr aus durchschnittlicher CPU-Auslastung der Sekunde vor der Neuberechnung der Schattenpreise freie Kapazität ableitet. Die Varianten DLPa und DLPc beziehen in die Optimierung die im Planungsintervall wieder frei werdenden Ressourcen mit ein. Ebenso werden bei Varianten DLPa und DLPc die Ressourcenbelegungsdauern von im Planungsintervall erwarteten Diensten auf die Planungsintervallendzeitpunkte beschränkt. Figur 10 zeigt die Ergebnisse der Simulation.

Die Simulationsresultate zeigen, daß mit steigender Last auf gemeinsam genutzte Ressourcen (im vorliegenden Fall durch die sukzessive Reduzierung der verfügbaren CPU-Zyklen) die Vorteile durch den Einsatz der Zugriffskontrollverfahren zunächst wie erwartet steigen, bei zunehmender Knappheit der Ressourcen jedoch rückläufig und bei sehr geringen Ressourcenmengen sogar negativ werden.

Die steigenden Vorteile durch den Einsatz des Zugriffskontrollverfahrens liegen darin begründet, daß bei zunehmender Ressourcenknappheit die Berücksichtigung der Priorität von Diensten und damit eine effiziente Ressourcenallokation zunehmend bedeutender werden. Sinkt die Anzahl der für die 5 Diensttypen verfügbaren CPU-Zyklen für eine Stunde um 30%, beispielsweise durch erhöhte Nachfrage nach anderen Diensten die ebenfalls auf dem Application Server ausgeführt werden, so vermindert sich das Systemleistungsniveau ebenfalls um durchschnittlich 30% von 5436 Leistungseinheiten auf 3751 Leistungseinheiten. Mit dem Einsatz der Zugriffskontrollverfahren kann in diesem Fall das Systemleistungsniveau deutlich erhöht werden. Beispielsweise ist mit dem Einsatz des Verfahrens entsprechend der Variante DLPc ein Systemleistungsniveau von 4869 Leistungseinheiten anstatt 3751 Leistungseinheiten realisierbar, was einer Steigerung von 1118 Leistungseinheiten bzw. 30% pro Stunde bei insgesamt 3000 Anfragen auf die fünf Dienste pro Minute.

Die Abnahme der Effizienz bei geringen Kapazitäten ist eine typische Eigenschaft, die auch bei Ertragsmanagementverfahren von Fluglinien zu beobachten ist (siehe M. Lewis, H. Ayhan, and R. Foley, "Bias optimal admission control policies for a multi-class non-stationary queuing system", Journal of Applied Probability, vol. 39, pp. 20-37, 2002). Schattenpreise werden zu konservativ, also zu hoch gesetzt. Werden beispielsweise von einem Premiumdienst P zwei Anfragen in einem Planungsintervall erwartet, von einem Standarddienst S jedoch zehn Anfragen, so würde bei einer Kapazität von zehn Einheiten und Ressourcenbelegungskoeffizienten von jeweils 1 alle zehn Anfragen nach S geblockt, um die Akzeptanz der beiden Premiumdienste zu garantieren, selbst wenn die Prioritätskennzahl von P nur geringfügig über der von S liegt. Diese Problematik kann durch künstliche Differenzierung gleicher Dienste, beispielsweise über minimale Variationen der Prioritätskennzahlen, entschärft werden.

In dem Szenario sind die exakteren Verfahren der Varianten DLPc und DLPa den statischeren Verfahren der Varianten DLP und DLPr bei Kapazitäten über 40% überlegen, nicht jedoch unter dieser Kapazitätsgrenze. Die Variante DLP parametrisiert mit den gesamten Kapazitäten, rechnet also in der Regel mit mehr Kapazität als tatsächlich im Planungszeitraum zur Verfügung steht. Die Optimierungsunschärfen durch zu hohe Schattenpreise und zu großzügige Kapazitätsrestriktionen kompensieren sich somit teilweise, was zu einer im Vergleich zu den anderen Methoden hohen Effizienz der Variante DLP führt.

Das hier beschriebene Verfahren unterscheidet sich in mehrfacher Hinsicht von herkömmlichen Zugriffskontrollverfahren. Das entwickelte Verfahren optimiert vorausschauend und betrachtet mehrere Dienste in einem Dienstportfolio, die jeweils mehrere, heterogene Ressourcen und nicht nur eine knappe Ressource gleichzeitig in Anspruch nehmen können. Die daraus entstehende Kombinatorik erfordert neue Modellierungsansätze. Verfahren der Ablaufkoordination optimieren zwar die Allokation mehrerer Ressourcen durch mehrere Dienste unter Einbezug von Prioritäten und Dienstleistungsvereinbarungen, allerdings sind diese Verfahren ausschließlich für asynchrone Dienste anwendbar, bei denen der Ausführungszeitpunkt für den Dienstnachfrager keine Rolle spielt. Des weiteren werden in dem hier beschriebenen Verfahren keine Antwortzeiten modelliert, wie das in Warteschlangennetzwerken üblicherweise der Fall ist.

**Patentansprüche**

1. Verfahren zur Steuerung eines Zugriffs auf Ressourcen eines Datenverarbeitungssystems, bei dem durch eine Datenverarbeitungsanlage

   - eine Prioritätskennzahl für eine Anforderung eines Zugriffs auf zumindest eine Ressource ermittelt wird,
   - eine Vergleichskennzahl für eine Einräumung des Zugriffs auf die zumindest eine angeforderte Ressource bezüglich einer alternativen Verwendung der Ressource ermittelt wird,
   - für eine Gesamtheit von Ressourcenanforderungen an das Datenverarbeitungssystem ein Extremwert für eine Summe über Produkte aus einer jeweiligen Prioritätskennzahl und aus einer Anzahl von jeweils einräumbaren Ressourcenzugriffen unter Berücksichtigung eines maximalen Leistungsvermögens einer angeforderten Ressource ermittelt wird,

   **dadurch gekennzeichnet, daß**

- für eine Ressourcenanforderung überprüft wird, ob die Prioritätskennzahl und die Vergleichskennzahl ein vorgegebenes Verhältnis zueinander aufweisen,
- der Zugriff in Abhängigkeit vom ermittelten Extremwert und vom Überprüfungsergebnis eingeräumt wird,
- eine Ermittlung des maximalen Leistungsvermögens einer angeforderten Ressource unter Berücksichtigung einer prognostizierten Nachfrage nach der angeforderten Ressource innerhalb eines vorgebbaren Zeitraums und einer Ressourcenauslastung zu einem vorgebbaren Zeitpunkt erfolgt,
- Ressourcen durch Dienste und/oder Anwendungen angefordert werden.

**2.** Verfahren nach Anspruch 1, bei dem
die Vergleichskennzahl Opportunitätskosten einer Verwendung einer Ressource sind.

**3.** Verfahren nach einem der Ansprüche 1 oder 2, bei dem
die Prioritätskennzahl mit zunehmender Priorität einer Ressourcenanforderung steigt und der Extremwert ein Maximum ist

**4.** Verfahren nach einem der Ansprüche 1 bis 3, bei dem
die Prioritätskennzahl eine monetäre Größe zur Bewertung einer Relevanz und/oder eines Wertes einer Ressourcenanforderung ist und überprüft wird, ob die Prioritätskennzahl größer als die Vergleichskennzahl ist.

**5.** Verfahren nach einem der Ansprüche 1 bis 4, bei dem
in die Ermittlung des Extremwerts zusätzlich mit einer Ablehnung einer Ressourcenanforderung verbundene Aufwände einbezogen werden.

**6.** Verfahren nach einem der Ansprüche 1 bis 5, bei dem
die Ermittlung des Extremwerts durch ein deterministisches lineares Programm erfolgt.

**7.** Verfahren nach einem der Ansprüche 1 bis 6, bei dem
für das maximale Leistungsvermögen einer angeforderten Ressource auf Grundlage von prognostizierten Restdauern von Zugriff auf die Ressource anfordernden Ressourcenanforderungen ein Korrekturwert berechnet und dieser in die Ermittlung des Extremwerts einbezogen wird.

**8.** Verfahren nach einem der Ansprüche 1 bis 7, bei dem
für die Ressourcenanforderungen Korrekturwerte, welche relevante Anteile einer Belegungsdauer einer angeforderten Ressource durch eine Ressourcenanforderung innerhalb eines vorgebbaren Zeitraum angeben, berechnet und in die Ermittlung des Extremwerts einbezogen werden.

**9.** Verfahren nach einem der Ansprüche 1 bis 8, bei dem
für jeden Zeitpunkt einer Ressourcenanforderung eine Echtzeitermittlung der Vergleichskennzahl erfolgt.

**10.** Verfahren nach einem der Ansprüche 1 bis 9, bei dem
die Ressourcen des Datenverarbeitungssystems in ihrer Gesamtheit eine Heterogenität aufweisen und beliebige Ressourcentypen bei der Zugriffssteuerung berücksichtigt werden.

**11.** Verfahren nach einem der Ansprüche 1 bis 10, bei dem
bei der Zugriffssteuerung über mehrere Dienste in einem Diensteportfolio optimiert wird, wobei eine Mehrzahl von heterogenen Ressourcen gleichzeitig durch einen Dienst nutzbar ist.

**12.** Steuerungsprogramm zur Einräumung eines Zugriffs auf Ressourcen eines Datenverarbeitungssystems, das in einen Arbeitsspeicher einer Datenverarbeitungsanlage ladbar ist und zumindest einen Codeabschnitt aufweist, bei dessen Ausführung

- eine Ermittlung einer Prioritätskennzahl für eine Anforderung eines Zugriffs auf zumindest eine Ressource veranlaßt wird, wobei Ressourcen durch Dienste und/oder Anwendungen angefordert werden,
- eine Ermittlung einer Vergleichskennzahl für eine Einräumung des Zugriffs auf die zumindest eine angeforderte Ressource bezüglich einer alternativen Verwendung der Ressource veranlaßt wird,
- für eine Gesamtheit von Ressourcenanforderungen an das Datenverarbeitungssystem eine Ermittlung eines Extremwerts für eine Summe über Produkte aus einer jeweiligen Prioritätskennzahl und aus einer Anzahl von jeweils einräumbaren Ressourcenzugriffen unter Berücksichtigung eines maximalen Leistungsvermögens einer angeforderten Ressource veranlaßt wird, wobei eine Ermittlung des maximalen Leistungsvermögens einer angeforderten Ressource unter Berücksichtigung einer prognostizierten Nachfrage nach der angeforderten Ressource innerhalb eines vorgebbaren Zeitraums und einer Ressourcenauslastung zu einem vorgebbaren Zeitpunkt erfolgt,

- für eine Ressourcenanforderung eine Überprüfung, ob die Prioritätskennzahl und die Vergleichskennzahl ein vorgegebenes Verhältnis zueinander aufweisen, veranlaßt wird,
- der Zugriff in Abhängigkeit vom ermittelten Extremwert und vom Überprüfungsergebnis eingeräumt wird,

wenn das Steuerungsprogramm in der Datenverarbeitungsanlage abläuft.

**Claims**

1. Method for controlling access to resources of a data processing system, wherein by means of data processing equipment

   - a priority code is determined for a request to access at least one resource,
   - a comparison code is determined for allowing access to the at least one requested resource with regard to an alternative use of the resource,
   - an extreme value is determined for a sum of products from a priority code in each case and from a number of respectively allowable resource accesses for all resource requests to the data processing system taking into account a maximum capacity of a requested resource,
   **characterised in that**
   - for a resource request, a check is made as to whether the priority code and the comparison code have a predetermined ratio to one another,
   - access is allowed depending on the determined extreme value and on the result of the check,
   - the maximum capacity of a requested resource is determined taking into account a predicted demand for the requested resource within a predetermined time period and a resource capacity utilisation at a predetermined point in time,
   - resources are requested by services and/or applications.

2. Method according to claim 1, wherein the comparison code represents opportunity costs of a use of a resource.

3. Method according to one of claims 1 or 2, wherein the priority code increases with increasing priority of a resource request and the extreme value is a maximum.

4. Method according to one of claims 1 to 3, wherein the priority code is a monetary variable for evaluating a relevance and/or a value of a resource request and a check is made as to whether the priority code is greater than the comparison code.

5. Method according to one of claims 1 to 4, wherein additional costs associated with a refusal of a resource request are included when determining the extreme value.

6. Method according to one of claims 1 to 5, wherein the extreme value is determined by a deterministic linear program.

7. Method according to one of claims 1 to 6, wherein a correction value is calculated for the maximum capacity of a requested resource on the basis of predicted remaining lengths of resource requests requesting access to the resource and this is included in the determination of the extreme value.

8. Method according to one of claims 1 to 7, wherein correction values which specify relevant portions of an occupying length of a requested resource by a resource request within a predetermined period of time are calculated for the resource requests and included in the determination of the extreme value.

9. Method according to one of claims 1 to 8, wherein for each point in time of a resource request the comparison code is determined in real time.

10. Method according to one of claims 1 to 9, wherein

the resources of the data processing system have in their entirety a heterogeneity and any resource types are taken into account in the access controlling.

11. Method according to one of claims 1 to 10, wherein
the access control is optimised by means of several services in a service portfolio, wherein a plurality of heterogeneous resources can be used at the same time by a service.

12. Control program for allowing access to resources of a data processing system which can be loaded into a main memory of a data processing system and has at least one code section, wherein in the execution of said control program

- a priority code is determined for a request for access to at least one resource, wherein resources are requested by services and/or applications,
- a comparison code is determined for allowing access to the at least one requested resource with regard to an alternative use of the resource,
- an extreme value is determined for a sum of products from each priority code and a number of respectively allowable resource accesses for all resource requests to the data processing system taking into account a maximum capacity of a requested resource, wherein the maximum capacity of a requested resource is determined taking into account a predicted demand for the requested resource within a predetermined time period and a resource capacity utilisation at a predetermined point in time,
- a check is made for a resource request as to whether the priority code and the comparison code have a predetermined ratio with one another,
- access is allowed depending on the determined extreme value and on the result of the check,

if the control program is running on the data processing equipment.

## Revendications

1. Procédé de contrôle d'un accès à des ressources d'un système de traitement de données dans lequel une installation de traitement de données

- détermine un indicateur de priorité pour une demande d'accès à au moins une ressource,
- détermine un indicateur de comparaison pour un octroi de l'accès à l'au moins une ressource demandée concernant une utilisation alternative de la ressource,
- détermine, pour un ensemble de demandes de ressources au système de traitement de données, compte tenu d'une performance maximale d'une ressource demandée, une valeur extrême d'une somme de produits d'un indicateur de priorité respectif et d'un nombre d'accès à des ressources pouvant respectivement être octroyés,

**caractérisé en ce que**

- il est vérifié, pour une demande de ressource, si l'indicateur de priorité et l'indicateur de comparaison présentent entre eux un rapport prédéterminé,
- l'accès est octroyé en fonction de la valeur extrême déterminée et du résultat de la vérification,
- une détermination de la performance maximale d'une ressource demandée est effectuée compte tenu d'une demande prévisionnelle de la ressource demandée dans les limites d'un espace de temps prédéterminable et d'une utilisation de la ressource à un instant prédéterminable,
- des ressources sont demandées par des services et/ou des applications.

2. Procédé selon la revendication 1, dans lequel l'indicateur de comparaison est un coût d'opportunité d'une utilisation d'une ressource.

3. Procédé selon l'une des revendications 1 ou 2, dans lequel l'indicateur de priorité augmente à mesure que la priorité d'une demande de ressource augmente et la valeur extrême est un maximum.

4. Procédé selon l'une des revendications 1 à 3, dans lequel l'indicateur de priorité est une grandeur monétaire pour l'évaluation d'une pertinence et/ou d'une valeur d'une demande de ressource et il est vérifié si l'indicateur de priorité est supérieur à l'indicateur de comparaison.

5. Procédé selon l'une des revendications 1 à 4, dans lequel interviennent additionnellement, dans la détermination de la valeur extrême, des dépenses liées à un refus d'une demande de ressource.

6. Procédé selon l'une des revendications 1 à 5, dans lequel la détermination de la valeur extrême est effectuée par un programme linéaire déterministe.

7. Procédé selon l'une des revendications 1 à 6, dans lequel une valeur de correction est calculée, pour la performance maximale d'une ressource demandée, sur la base de durées restantes prévisionnelles de demandes de ressources demandant un accès à la ressource et ladite valeur de correction intervient dans la détermination de la valeur extrême.

8. Procédé selon l'une des revendications 1 à 7, dans lequel des valeurs de correction qui indiquent les parties pertinentes d'une durée d'occupation d'une ressource demandée, par une demande de ressource dans un espace de temps prédéterminable, sont calculées pour les demandes de ressources et interviennent dans la détermination de la valeur extrême.

9. Procédé selon l'une des revendications 1 à 8, dans lequel une détermination en temps réel de l'indicateur de comparaison est effectuée pour chaque instant d'une demande de ressource.

10. Procédé selon l'une des revendications 1 à 9, dans lequel les ressources du système de traitement de données présentent une hétérogénéité dans leur ensemble et n'importe quels types de ressources sont pris en considération lors du contrôle d'accès.

11. Procédé selon l'une des revendications 1 à 10, dans lequel il y a optimisation lors du contrôle d'accès par l'intermédiaire de plusieurs services dans un portefeuille de services, une pluralité de ressources hétérogènes pouvant être utilisée simultanément par un service.

12. Programme de contrôle pour l'octroi d'un accès à des ressources d'un système de traitement de données, lequel peut être chargé dans la mémoire de travail d'une installation de traitement de données et présente au moins une partie de code, à l'exécution duquel

- est provoquée une détermination d'un indicateur de priorité pour une demande d'un accès à au moins une ressource, des ressources étant demandées par des services et/ou des applications,
- est provoquée une détermination d'un indicateur de comparaison pour un octroi de l'accès à l'au moins une ressource demandée concernant une utilisation alternative de la ressource,
- est provoquée, pour un ensemble de demandes de ressources au système de traitement de données, une détermination, compte tenu d'une performance maximale d'une ressource demandée, d'une valeur extrême d'une somme de produits d'un indicateur de priorité respectif et d'un nombre d'accès à des ressources pouvant respectivement être octroyés, une détermination de la performance maximale d'une ressource demandée étant effectuée compte tenu d'une demande prévisionnelle de la ressource demandée dans les limites d'un espace de temps prédéterminable et d'une utilisation de la ressource à un instant prédéterminable,
- est provoquée, pour une demande de ressource, une vérification visant à établir si l'indicateur de priorité et l'indicateur de comparaison présentent entre eux un rapport prédéterminé,
- l'accès est octroyé en fonction de la valeur extrême déterminée et du résultat de la vérification

lorsque le programme de contrôle est exécuté sur l'installation de traitement de données.

# FIG 1

Dienst

1 ... i ... I

Ressource

| | 1 | i | I |
|---|---|---|---|
| 1 | 9 | 24 | 54 | $C_1/\lambda_1$ |
| e | 13 | $a_{ei}$ | 16 | $C_e/\lambda_e$ |
| E | 20 | 10 | K | $C_E/\lambda_E$ |

Kapazität / Schattenpreis

$D_1/r_1$  $D_i/r_i$  $D_I/r_I$

Durchschnittliche Nachfrage in $\Delta t$ / Prioritätskennzahl

# FIG 2

Dienst

1 ... i ... I

Ressource

| | 1 | i | I |
|---|---|---|---|
| 1 | 9 / 1 | 12 / 2 | 1 / 54 | $C_1/\lambda_1$ |
| e | 13 / 1 | $a_{ei}$ / $t_{ei}$ | 16 / 2 | $C_e/\lambda_e$ |
| E | 1 / 20 | 10 / 1 | 4 / 2 | $C_E/\lambda_E$ |

Kapazität / Schattenpreis

$D_1/r_1$  $D_i/r_i$  $D_I/r_I$

Durchschnittliche Nachfrage in $\Delta t$ / Prioritätskennzahl

## FIG 3

## FIG 4

## FIG 5

## FIG 6

## FIG 7

$U_e$

$t_{ei}-1b_i$

$t_{ei}-2b_i$

$t_{ei}-3b_i$

$b_i$    $b_i$    $b_i$

Zeit

$t_k$    $t_k+t_{ek}$

## FIG 8

$U_e$

$b_i$

Zeit

$t_k$    $t_k+t_{ek}$

## FIG 9

Anfrage
k

Nachfrage
$D_i$ (m,v)

Best. verfügbare Kapazität
Berechne Schattenpreise

$t_{req}(k)$

Prioritätskennzahl >
Schattenpreise?

Nein

Ressourcen

## FIG 10

Systemleistungsniveau / Stunde
(Leistungseinheiten)

6000
5000
4000
3000
2000
1000
0

DLPa

DLPc

DLPr

DLP

100 90 80 70 60 50 40 30 20 10 0
Verfügbare CPU-Leistung (% benötiger Leistung)

----- DLP           — DLPr
····· DLPa          — Keine Zugriffskontrolle
— DLPc

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5640569 A

**In der Beschreibung aufgeführte Nicht-Patentliteratur**

- **X. CHEN ; P. MOHAPATRA ; H. CHEN.** An Admission Control Scheme for Predictable Server Response Time for Web Accesses. *World Wide Web Conference,* 2001
- **M. RUMSEWICZ ; M. CASTRO ; M. TAI LE.** Eddie Admission Control Scheme: Algorithm Description, Prototype Design Details and Capacity Benchmarking. *Sourceforge,* 1999
- Application-Level differentiated service from an internet server. **EGGERT ; J. HEIDEMANN.** World Wide Web Journal. 1999, vol. 3, 133-142
- **A. VERMA ; S. GHOSAL.** On Admission Control for Profit Maximization of Networked Service Providers. *World Wide Web Conference,* 2003
- **S. ELNIKETY ; E. NAHUM ; J. TRACEY ; W. ZWAENEPOEL.** A Method for Transparent Admission Control and Request Scheduling in E-Commerce Web Sites. *World Wide Web Conference,* 2004
- **Z. LIU ; M. S. SQUILLANTE ; J. L. WOLF.** On Maximizing Service-Level-Agreement Profits. *3rd ACM Conference on Electronic Commerce,* 2001
- **E. L. WILLIAMSON.** *Airline Network Seat Control,* 1992
- **S. ELNIKETY ; J. TRACEY ; E. NAHUM ; W. ZWAENEPOEL.** A Method for Transparent Admission Control and Request Scheduling in E-Commerce Web Sites. *Management Science,* 2003, vol. XX
- **M. LEWIS ; H. AYHAN ; R. FOLEY.** Bias optimal admission control policies for a multi-class non-stationary queuing system. *Journal of Applied Probability,* 2002, vol. 39, 20-37